# EUROPEAN PATENT APPLICATION

(11) **EP 3 896 250 A1**
(43) Date of publication of application: **20.10.2021**
(21) Application number: 20169411.4
(22) Date of filing: 14.04.2020
(51) Int. Cl.: E21B 43/20, E21B 43/01, E21B 41/00, B01D 61/00, B01D 65/00

(54) **PROCESSING SEAWATER SUBSEA**

(71) Applicant: National Oilwell Varco Norway AS, 4604 Kristiansand S (NO)
(72) Inventor: Pinchin, David, 4077 HUNDVÅG (NO); Haruna, Ojonimi Samuel, 4014 STAVANGER (NO); Ghorbaniyan, Masoud, 4031 STAVANGER (NO)
(74) Representative: Håmsø Patentbyrå AS

(57) **Abstract**

There is described the processing seawater in a subsea facility on the seabed in various methods and apparatus. In various examples, the facility is coupled to at least one well, is configured to provide the well with water to be injected into at least one formation of the well, and comprises filter elements arranged in housings, the filter elements being configured for ultrafiltration or microfiltration. In such examples, treated seawater in at least one of the housings is filtered using at least one filter element, producing thereby filtered water, and at least one filter element in at least one other of the filter housings is cleaned by backwashing performed using at least some of the produced filtered water.

## Description

### Technical field

The present invention relates to the processing of seawater subsea, in particular, by ultrafiltration or microfiltration in a seabed facility.

### Background

In the processing of water, such as seawater, filters may be employed to remove particles or otherwise condition the water. Ultrafiltration or microfiltration to remove suspended solids in seawater is a known method for making the water better suited for special applications, e.g. matrix flooding of oil reservoirs or membrane treatment for removing sulphate and salts.

Over time, particles removed by the filters build up, e.g. as residue or biofilm, on surfaces of the filters. This adversely affects filter performance. The build-up can be identified by measuring and monitoring the pressure build up across the filters.

Subsea systems provide significant operational challenges where large volumes of water are needed, e.g. on a continuous basis, such as for water injection into subterranean reservoirs. Large numbers of filters may be needed to handle the volume. This can lead to operational difficulties and complexity, as filter elements will need cleaning and/or need replacing. Filters that need replacing or cleaning may then need to be brought offline. The subsea environment provides practical difficulties such that physical access to components can be difficult and costly, and replacement procedures time consuming and inconvenient.

In the oil and gas production industry, the SWIT™ technology of National Oilwell Varco can be used at seabed location and can produce desired quality of water suitable for injection into oil reservoirs for increased oil recovery. The water treatment employed in this system can adjust the chemical composition of injection water to suit specific demands of any reservoir. The injection of low salinity or low sulphate water in many reservoirs has shown significant increases in recovery factor of the oil in place. Removal of sulphate ions from injected seawater has demonstrated prevention of scaling and reservoir souring.

### Summary

At least one aim of the invention is to obviate or at least mitigate one or more drawbacks associated with prior art, for example where long-term operation of such subsea systems has not been possible.

In light of the above, according to a first aspect of the invention there is provided a method of processing seawater in a subsea facility on the seabed, wherein the facility is coupled to at least one well and is configured to provide the well with water to be injected into at least one formation of the well, and wherein the facility comprises filter elements arranged in housings, the filter elements being configured for ultrafiltration or microfiltration, the method comprising the steps of: filtering treated seawater in at least one of the housings using at least one filter element, producing thereby filtered water; and cleaning at least one filter element in at least one other of the filter housings by backwashing which is performed using at least some of the produced filtered water.

Preferably, the cleaning of the filters is by backwashing only. Preferably also, the backwashing is performed using only filtered water produced from the filter elements. The backwashing may be sufficient to clean the filters. Thus, backwashing may be used in this way to clean the filter element in all instances of cleaning.

Preferably, the treated seawater has undergone disinfection treatment upstream of the filter housings. The upstream disinfection treatment of the seawater may typically comprise chlorination of the seawater. The treated seawater may have undergone other upstream electrochemical treatment to condition the water for filtering treatment. The upstream treatment of the water may typically be by the Seabox® technology. The upstream treatment of the water may be performed by at least one treatment unit, e.g. at least one Seabox® treatment unit.

The subsea facility may be operable to produce filtered water from the membranes at a rate in the range of 100 to 1000 barrels per day, or in the range of 1000 to 10000 barrels per day, or in the range of 10000 to 500000 barrels or more per day.

The method may further comprise directing the treated seawater in parallel through at least two different filter housings to filter the seawater.

The method may further comprise transmitting at least some of the produced filtered water to the well and/or injecting the filtered water into the formation. The method may further comprise further processing or treating the filtered water to obtain the water to be injected into the well. The method may then further comprise transmitting the obtained water to the well, and/or injecting the obtained water into the formation.

The backwashing may comprise communicating backwash water through the filter elements to remove residue or particles from the filter elements, wherein the backwash water may comprise the at least some of the produced filtered water. The method may further comprise generating suction in the backwash water that has travelled through the filter element to facilitate communication of the backwash water through the filter element.

The method may include defining batches of filter housings that contain filter elements to be backwashed. The backwashing of the filter elements may be performed batch by batch, wherein the backwashing of one batch may be performed using backwash water comprising at least some of the produced filtered water from the filter elements of at least one other batch, the backwashing and filtering of water taking place concurrently, at least for some of the time.

The method may further comprise performing a plurality of backwash cycles. In each cycle, the filter elements may be backwashed in batches, one at a time, based on predefined parameters selected from one or more of: time interval between successive cleaning sequences; time interval between backwashing different batches in the cleaning cycle; order or sequence of backwashing of the batches, e.g. banks, within the cycle; duration of the backwashing; and flow rate of backwash water during backwashing.

According to a second aspect of the invention, there is provided apparatus for performing the method in accordance with the first aspect of the invention. The apparatus may be arranged to be deployed subsea, e.g. on the seabed. The apparatus may comprise filter elements arranged in housings. The filter elements may be configured for ultrafiltration or microfiltration. The apparatus may be operable to filter treated seawater in at least one of the housings. The apparatus may be further operable to selectively clean, by backwashing performed using at least some of the produced filtered water, at least one filter element of at least one other of the filter housings.

Preferably, the apparatus further comprises at least one valve, e.g. a switcher valve, for switching at least one of the housings between a first, filter mode and a second, backwash mode.

In the backwash mode, fluid communication between a production conduit of the at least one of the housings and a backwash conduit may be obtained for communicating at least some of the produced filtered water from the production outlet through the switched housing to the backwash conduit.

Preferably also, the apparatus may further comprise at least one suction device for generating suction in the backwash conduit in the backwash mode for facilitating to draw filtered water from the production conduit through the housing and the valve into the backwash conduit.

The suction device may be arranged downstream of the valve or downstream of the housing in backwash mode or both. The suction device may comprise at least one ejector. Alternatively or in addition, the suction device may comprise at least one pump arranged to produce suction in the backwash conduit at a location upstream of the pump.

In the filter mode, fluid communication may be obtained between a supply conduit and the filter housing for supplying treated seawater to the filter housing. Fluid communication between the filter housing being supplied with treated water and the backwash conduit may then be prevented.

In the filter mode, supplied seawater to be filtered may enter the filter housing in a forward direction, and in the backwash mode, backwash water may exit the filter housing in a reverse direction, wherein the backwash water may comprise the at least some of the produced filtered water, e.g. filtered water from the production conduit or outlet(s) of one or more of the other filter housing(s). The backwash water exiting the filter housing may carry dislodged residue or particles removed from the filter.

The valve may comprise at least one remotely operable three-way valve. The three-way valve may have first, second, and third flow sections.

The valve may be controllable so that, in the filter mode, the first flow section may be arranged in fluid communication with the second flow section, e.g. providing a passageway through the valve via the first and second flow sections, for supplying treated seawater to the filter housing. The valve may be controllable, so that, in the backwash mode, the first flow section may be arranged in fluid communication with the third flow section, e.g. providing a passageway through the valve via the first and the third flow sections, for discharging backwash water from the filter housing to the backwash conduit.

The first flow section of the valve may be coupled, e.g. connected by flanges or the like, to the filter housing. The second flow section of the valve may be coupled, e.g. connected by flanges or the like, to the supply conduit. The third flow section of the valve may be coupled, e.g. connected by flanges or the like, to a backwash conduit.

Typically, the valve serves a plurality of filter housings, the first flow section being connected to the plurality of filter housings or banks thereof.

The apparatus may have a plurality of banks of filter housings, each bank served by a respective at least one valve, which may be the three-way valve.

The apparatus may have at least one production conduit for transmitting produced filtered water from the filter housings downstream, e.g. for desired use, e.g. to be pumped into a well. The production conduit may comprise a common pipe or manifold, wherein the filter housings or banks may have respective outlets which feed into production conduit. Thus, the production conduit may serve a plurality of the banks or filter elements.

The apparatus may have at least one supply conduit for supplying treated seawater to be filtered to the filter housings. The supply conduit may comprise a common pipe or manifold. The supply conduit may be arranged to distribute fluid in parallel to multiple banks or filter elements. Thus, the supply conduit may serve a plurality of banks or filter elements.

The apparatus may have at least one backwash conduit for discharging backwash water from the filter housings. The backwash conduit may comprise a common pipe or manifold. The backwash conduit may serve a plurality of banks or filter elements.

Each respective valve may be connected to the same supply conduit, backwash conduit, and production conduit. The respective valves may be operable independently and the banks or filter housings served by the valves may accordingly be operable independently of one another by operation of the valves.

The at least one valve may have a body which may be movably disposed within a valve housing to be movable between one configuration in the filter mode and another configuration in the backwash mode. The body of the valve in one mode may prevent fluid communication in the other and vice versa.

The filter housings may be arranged to be supplied with treated seawater in parallel from a common supply conduit to for filtering the seawater in parallel.

At least one or more of the filter housings may each comprise a plurality of spaced apart tubular sections in which filter membranes may be contained.

The apparatus may be supported on the seabed, e.g. for supplying processed seawater to at least one well. The apparatus may be coupled to at least one well, e.g. for providing the well with treated water to be injected into at least one formation of the well. At least one or more of the filter housings may then be submerged and each may comprise a plurality of horizontally spaced apart vertical tubular sections in which the filter membranes are contained. The tubular sections may have a common height above the seabed. The filter housings or banks of filter housings may be arranged in a horizontal single layer 2-D array, for parallel processing of the treated seawater through the filter housings in the array.

The filter elements may comprise hollow fibre filters. The filter elements may comprise filter membranes. The filter elements, e.g. filter membranes, may preferably be arranged in dead-end configuration in the housings.

According to a third aspect of the invention, there is provided a subsea system or facility comprising apparatus in accordance with the second aspect of the invention. The system or facility may further comprise at least one pre-treatment unit for pre-treating the water to be filtered, the pre-treatment unit being coupled to the apparatus for supplying pre-treated water to the apparatus.

Any of the above aspects may have one or more further features as described in relation to any other aspect wherever described herein.

Various advantages of embodiments of the invention will be apparent from throughout the description herein.

### Description and drawings

There will now be described, by way of example only, embodiments of the invention, with reference to the accompanying drawings, in which:
- Figure 1: is a schematic representation of a facility for processing seawater on the seabed;
- Figure 2: is a schematic perspective representation of water processing apparatus in the facility of Figure 1 for ultrafiltration or microfiltration of the water;
- Figure 3: is a schematic diagram of part of the facility of Figure 1;
- Figure 4: is a side view in close up of a filter housing for housing ultrafilter or microfilter membranes for the water processing apparatus of Figure 2;
- Figure 5: is an end on view of the filter housing of Figure 4;
- Figure 6: is a perspective view of a module bank of filter housings for the water processing apparatus of Figure 2;
- Figure 7: is a graph of model behaviour for discharge contaminant against time for backwashing of a filter membrane housing; and
- Figure 8: is a graph of experimental results of particle count versus time for a test system.

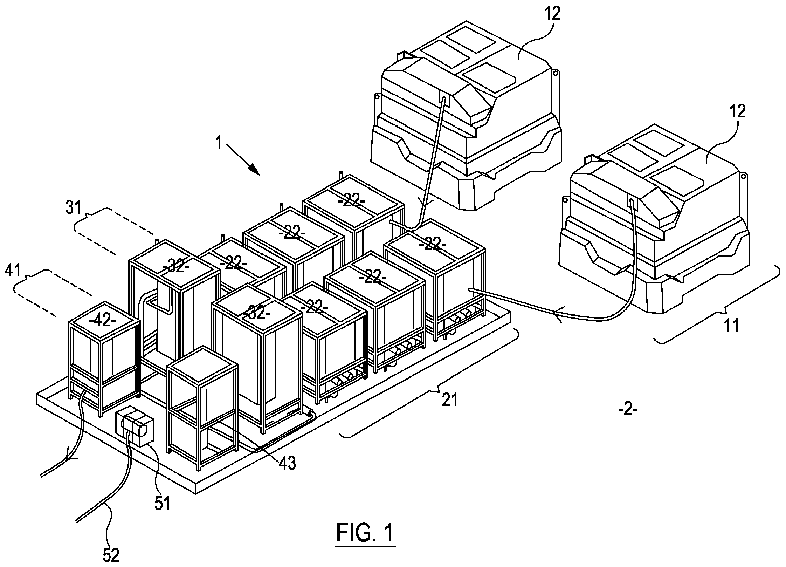

With reference to Figure 1, there is generally depicted a subsea facility 1 on the seabed 2 comprising apparatus for processing seawater. The processing includes treating and filtering the seawater. This facility 1 is designed to take in raw seawater from the surrounding sea and process the seawater to produce a desired injection quality water that contains low levels of contaminating or otherwise undesirable particles, such that the end product water is suitable for injection into a well.

In particular, the present solution can provide long term operation of the filter system subsea. The inventors have noted that the filter system, which changes the chemical composition of the water, is highly dependent upon the quality of the feed water and the silt density index (SDI) level, and this SDI value preferably is around 1 or less.

To condition the seawater for long term membrane treatment, prior systems reduce selective ion content in the seawater. However, prior techniques in general may be incapable of obtaining the desired performance over significant periods of time. If expected lifetime of filter elements is to be 6 months or more, the inventors have determined that to condition the seawater to a SDI level of below 2, preferably around 1 or even below 1, operation with absolute filtration at below 0.2 micron or even 0.1 micron is required to achieve an SDI of around 1 or less.

For long term operation at the seabed, only backwashing is considered as a practical method of keeping the filters in good condition. This differs from many other applications where also other methods like acid washing and air blowing can also be practical means of keeping the filters in good condition, however the inventors have considered such other means to be less practical in a subsea environment. Backwashing means that the filters in question are subjected to a flow of fluid in the "reverse" direction, i.e. opposite to the normal "forward" flow direction used for filtering. Backwashing can thereby remove particles from the surfaces of the filters and performance of the filter can be brought back at least close to its original state. The filter that has been backwashed may then again be utilized in a forward flow for filtering duty in the water processing system. Over a long period of time (several months or more) however, some permanent clogging and/or deterioration of the filter performance may take place. The point may be reached where the filter can no longer be replenished back to a satisfactory state by backwashing and thus needs to be replaced. As this may be an inconvenient and very expensive operation, it is sought as a matter of utmost importance to prolong the possible operation as long as possible.

Various processing steps are performed by the facility 1. These steps include:
1) intake and pre-treatment, including chemical disinfection or anti-bacterial treatment, e.g. chlorination treatment;
2) microfiltration and/or ultrafiltration of the pre-treated water to remove particles;
3) nanofiltration; and
4) pumping the produced water to the well for injection.

The facility 1 has first stage water processing apparatus 11 for performing the intake and pre-treatment step, second stage water processing apparatus 21 for performing the microfiltration or ultrafiltration step, third stage water processing apparatus 31 for performing the nanofiltration step, and fourth stage water processing apparatus 41 for performing the pumping step. The facility 1 as depicted in Figure 1 is modular. That is, it comprises modules which are deployed as units and then connected together on the seabed. This can facilitate subsea installation, intervention, replacement and use. The first stage processing apparatus 11 comprises two Seabox® modules 12 for performing the intake and pre-treatment of the seawater. An example of such apparatus 11 is described in the patent application with patent publication number WO2014/126479.

The second stage processing apparatus 21 includes several microfiltration or ultrafiltration modules, the third stage apparatus includes nanomembrane / RO modules 32, and the fourth stage includes an injection pump module 42 and a feed pump module 43. The facility 1 is operated remotely through an umbilical 52 which connects to umbilical connection 51 of the facility 1 for delivering electrical, hydraulic, and optical fibre services for operating the apparatus of the facility.

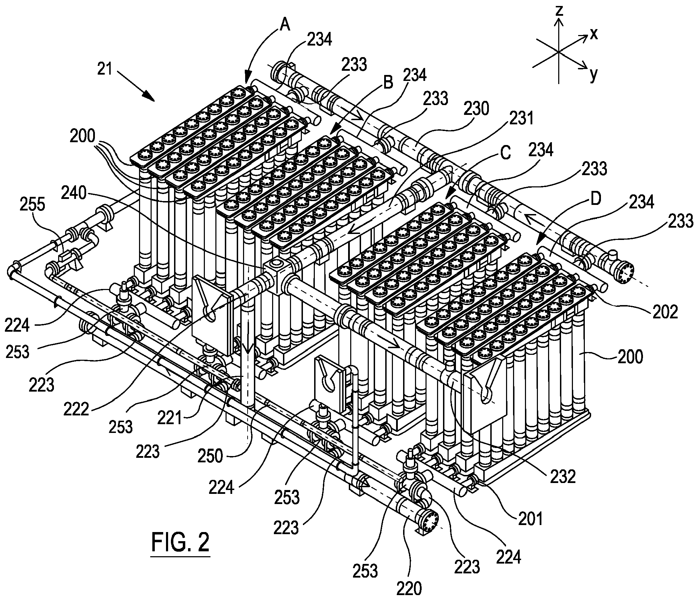

Of particular interest herein is the second stage water processing apparatus 21, as exemplified further in Figure 2. In this example, the apparatus 21 is used for processing the water by ultrafiltration, although by use of appropriate filter elements, such processing can in other variants of the apparatus 21 be by microfiltration. The filter elements in this example are hollow fibre filters, but other equivalent solutions may be employed in other cases. Such a hollow fibre filter has pores which permits passage of the water but does not permit passage of particles above a certain size. In this example, the hollow fibre microfiltration technology is based on a "dead-end" filtration principle: particulates larger than 0.1 micron will be retained and will not go through the filter pores.

The apparatus 21 comprises multiple filter housings arranged in this example in four banks A, B, C, D. Thus, each of the banks A, B, C, D comprises filter housings 200. Each filter housing 200 contains a plurality of micro or ultrafiltration filters. The filter housing 200 has an inlet 201 for supplying the water to be filtered and an outlet 202 for outputting filtered water. The filter housings 200 are described in further detail below. Suitable filter housings of this kind are also described in the published patent application with publication number WO2019/190330.

The housings 200 are connected to pipework which allows the pre-treated water from the first stage processing apparatus 11 to be fed through the filter elements in the housings 200 to filter the water. The pipework also allows the filtered water to be directed away downstream to the third stage processing apparatus 31 for further processing and injection of the processed water from the facility 1 into the well (not shown). For matrix flooding applications this micro or ultra-filtered water may be directly injected into a reservoir, that is without going through any further stages of processing.

From time to time, the filter housings 200 and filter elements therein are cleaned to remove deposited residues and particles from surfaces of the filters that have been used in filtering duty. The residue comprises solids material that is left behind on the filter element as the water passes through the filter. At least one or some of the banks of filter housings 200 are then backwashed. The banks are backwashed using some of the filtered fluid being produced from one or more of the other banks.

The water supplied to the filter housings 200 has thus already been treated in the modules 12. The filtered water output from the filter housings 200 is used for backwashing. Backwashing using only filtered water can be carried out. The facility 1 can direct some of the filtered water (filtrate) obtained from some of the housings to back through the filter membranes of other housings by appropriate pipework and control of valves, as will be explained further below.

Only backwashing is used to clean the filters, and only filtered water is used for the backwashing. Thus, the cleaning is carried out without adding or needing to add chemicals or scourers or anything else. The water being filtered is pre-treated and disinfected by the modules 12, and the feed to the filters is only water of that kind, which can also be an important factor in promoting the longevity of the filter elements. That is, the rate of build-up of permanent fouling may be lower than normal, by using the specific pre-treated water. The time before replacement is required will thus be increased. By arranging the filters so that they only filter the previously disinfected water, the condition of the fouling that then naturally occurs on the filter membranes may be easier to remove and/or may be removable by backwash water comprising only filtered water (i.e. without any additives).

Obtainable longevity of filters before requiring replacement, by intermittently cleaning as explained herein using only backwashing and doing so using only the pre-treated filtered water, may be up to 6 months, up to 12 months, or even up to 30 months or more. Long term operation on the seabed may then be obtained without need for maintenance or outside intervention.

In more detail now and still referring to Figure 2, the arrangement of the apparatus 21 on the supply side of the banks can be seen, where the apparatus 21 has a supply header 220 and a supply line 221 which is arranged to feed and supply pre-treated seawater from the modules 12 into the supply header 220.

The apparatus 21 includes a connecting pipe section 222 arranged to connect to the supply line 221 and an input end arranged to be connected to upstream pipework for supplying treated seawater to the apparatus 21.

The supply header 220 is connected in parallel to four connecting pipe sections 223 to distribute the treated seawater in the header 220 into the respective four banks of filters A, B, C and D. The supply header 220 is in the form of a pipe, and the connecting pipe sections 223 extend from the side of the pipe of the supply header.

Each connecting pipe section 223 of each bank connects to a supply manifold pipe 224 which in turn is connected to the inlet flange of each of the filter housings 200. The treated seawater can thus pass from the supply header 220, through the connecting pipe section 223, into the supply manifold 224, and then (distributed in parallel) into each of the filter housings 200 of the bank.

Turning now to the production side of the banks, the apparatus 21 has a production header 230 and production line 231 which is arranged to extract filtered seawater from the production header 230 and direct the filtered seawater downstream. The production line 231 connects through a valve 240 to a downstream connecting pipe section 232. The downstream connecting pipe section 232 is arranged to connect to the production line 231 and the production line 231 in turn is arranged to connect through the connecting pipe section 232 to downstream pipework for supplying the filtered seawater to the feed pump 43 which pumps the seawater onward to the third and fourth stage apparatus 31, 41 of the facility 1 for injection.

The production header 230 is connected in parallel to four manifold pipes 234 via connecting stubs 233 which receive and communicate distributed flows of filtered seawater into the production header 230 from the respective four banks of filters A, B, C and D. The production header 230 is in the form of a pipe, and the connecting stubs 233 provide connection on the side of the pipe of the production header 230.

The production manifold pipe 234 is in turn connected to the outlet flange of each of the filter housings 200. The filtered seawater can thus pass in a flow from the respective filter housings 200, into the production manifold 234, through the connecting stubs 233, and into the production header 230. The filtered water produced from the different housings 200 is brought together in the production header 230 and is directed into the exit line 231 conveying the water onward downstream in a common flow of the filtered water.

The filter housings 200 have spaced apart vertical tubular sections in which the filter elements are provided and are arranged in dead-end configuration, meaning that the water entering the filter housing must pass through the filter element in order to exit the housing. Water passes from the inlet to the outlet of the housing in parallel through the vertical tubular sections and through the filter elements and thereby filtered.

The apparatus 21 is operable in different modes. In the first mode, all of the banks (and all of the filter housings within each bank) are engaged in filtering. Pre-treated water is fed through connecting pipe 222, through the supply pipe 221 and into the supply header 220. From the supply header 220, the water is distributed so as to flow in parallel into the connecting pipe sections 223 and to the supply manifolds 224. From the manifold 224, the water is again distributed so as to flow in parallel into the inlets/outlets of filter housings 200 and through the membranes. Parallel filtering of the pre-treated water therefore takes place inside the housings 200, and the filtered water which has passed through the filter elements in the housing is directed through the outlet into the production manifolds 234. From the production manifold, the filtered water is communicated through the connecting stubs 233 into the production header 230. The filtered water received in the production header 230 then is directed together into and extracted along the production pipe 231 and the downstream connector pipe 232.

In this first mode, the banks A, B, C, D all contribute to obtain the desired produced output of filtered water into the production header 230. The water is processed in parallel in the filter housings 200 and banks of filter housings. The desired output is typically determined in advance according to requirements of the well. The facility 1 operates to continuously make available processed water that is then injected into the well. The facility 1 can produce 10000 barrels or more of filtered water per day.

After a period of time in filtering operation, the filter elements that have been engaged in the filtering have to be cleaned. The cleaning is done by backwashing. Backwashing is performed by directing some of the produced filtered water back through one or more selected filter housings 200 to remove the residue or particles on the surfaces of the filter elements. The facility 1 is thus operable in a second mode to perform backwashing.

A principle of operation is to maintain a constant total output (as constant as possible) of the volumetric flow out of the microfiltration or ultrafiltration banks. This is achieved by increasing the flow through the Seabox™ units 12 and the filter elements that perform filtering when backwashing of other filter elements takes place.

When backwashing, the "backwash" water travels in reverse direction from the production header 230 through the filter elements 200 to remove the residue and particles, allowing them later to be used again for filtering. The apparatus 21 includes a backwash pipeline 250 through which the backwash water that has passed through the filter is communicated and discharged. The backwash water exits the filter housings 200, passes into the supply manifold 224, and from the manifold 224 is directed into the backwash pipeline 250.

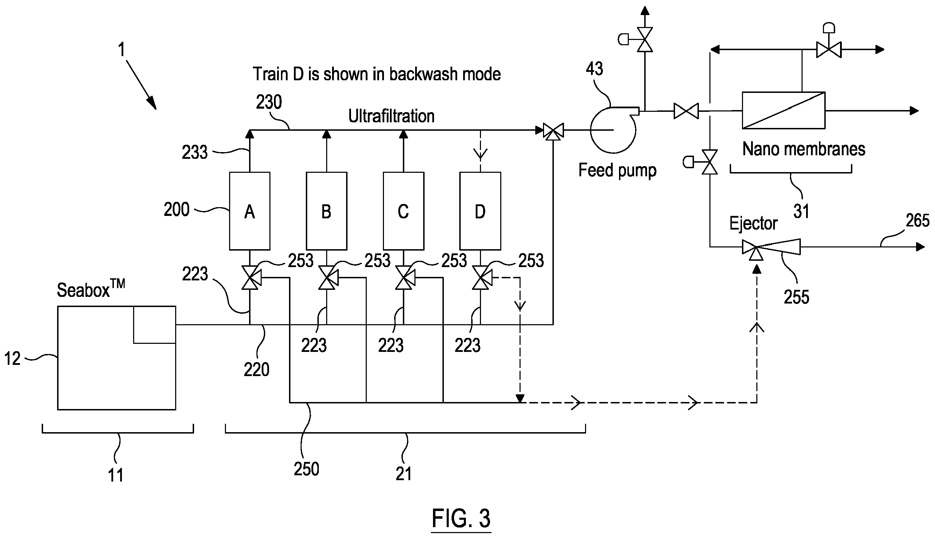

The second, backwash mode can be further understood by reference additionally now to Figure 3, where the bank D is being backwashed. To operate the facility in the backwash mode, the connecting pipe section 223 between the supply header 220 and the manifold 224 of the associated bank, is provided with a three-way control valve 253. The valve 253 can be controlled to switch between the following configurations: a first configuration, where the supply header 220 is connected to the filter housings 200 and communication between the filter housings 200 and the backwash line 250 is closed, when filtering, and a second configuration where the inlets 201 to filter housings 200 are connected to the backwash line 250 and communication between the supply header 220 and the filter housings 200 is closed, when backwashing.

The valve 253 is switched from its first configuration to the second configuration to switch from the first mode to the second mode.

For example, as seen in Figure 3, if the housings of bank D are designated to be backwashed, then the valve 253 that is associated with bank D, and only that valve, is switched into the second configuration. Filtering continues and filtered water continues to be output from banks A, B, and C, but some of that filtered water is drawn from the production header 230 back through pipe stubs 233 into the bank D filter housings and into the backwash line 250 via the three-way control valve 253. Switching the valve 253 back to the first configuration brings the bank D back to filtering configuration, and can bring the facility back to the first mode with all housings engaged in filtration duty.

The backwash water in the backwash line 250 contains removed particles from the filter and is eventually discharged into the sea environment. The water with entrained particles is at lower pressure than the backwash water supplied into the bank D, and the facility includes an ejector 255 which operates to encourage flow into a downstream discharge pipe 265. The ejector 255 comprises a venturi tube. Discharge fluid is pumped through the discharge pipe 265 through the venturi tube producing a low pressure in the flowing fluid that creates a suction effect in the backwash line 250 and draws the backwash water into the discharge pipe 265. The backwash water then travels downstream through the discharge pipe 265 together with the discharge fluid. Sufficient suction is provided to reverse the flow through the filter housing(s) that is being backwashed.

The removal of the residue from surfaces of the filter can be more effective by way of the production of the suction downstream from the filter. Generation of suction downstream of the filters in backwashing is therefore preferred to an alternative of increasing the pressure upstream of the filters, e.g. in the line 233 supplying the backwash fluid to the bank of filter housings, in order to provide the necessary pressure differential across the filter. The suction can in other examples be provided by a pump arranged downstream from the filter housings, used for example instead of the ejector 255. The solution of suction downstream can be more effective particularly on dead-end membrane filter elements because the suction provides a more targeted approach to removing the particles in that it can help to "pull away" particles of residue from the outside before working on the particles deposited nearest the filter surface. As the particles are removed, the particles nearest the filter surface are increasingly targeted. This can contribute to a more efficient removal of particles and lower required backwash time and promote longevity of filters.

In both the first and second modes of the apparatus, the total output of filtered produced from the apparatus is preferably unchanged. In the second, backwashing mode such as with the bank D being backwashed as in Figure 3, the three other banks A, B, C are operated to compensate both for the lack of contribution of bank D toward the filtered output and for the consumption of the bank D of some of the filtered water produced by the banks A, B and C. Thus, when bank D is being backwashed, the banks A, B and C need to produce more filtered water than when all banks are operating to filter water. More water is therefore driven through the filter banks A, B, and C per unit time. This in turn increases the build-up rate of residue on those filter banks.

Reducing the required backwash time, e.g. through use of the ejector, will therefore also help to reduce the amount of time spent at higher production rates of other filters, and thus promote longevity of the filters.

After the bank D has been backwashed, it is typically returned to filtering duty by operating the valve 253. Another bank may then be selected and operated for backwashing by operating the relevant valve 253. A cycle of cleaning can be completed through which each of the banks is cleaned by backwashing, one after the other, while the others continue to operate to filter the water. For example, a sequence may be completed by backwashing, one at a time, bank A, then bank B, then bank C, and then bank D.

Operation of the apparatus can be performed to carry out such a cycle of cleaning upon sending one or more instructions e.g. remote or pre-programmed instructions to the control valves 253 at the appropriate time. The cycle is performed from time to time in the course of performing the production/filtering process.

The above principles can be applied more generally with any number of banks, and in some examples one or more banks may be backwashed while one or more others filter water.

The operation is performed using parameters which can conveniently be pre-determined, and which can include:
- time interval between successive cleaning cycles;
- time interval between backwashing different banks of given cleaning sequence;
- order or sequence of backwashing of the banks within a cycle;
- duration of the backwashing time and setting this to allow for different lengths of piping to ensure sufficient time to get rid of all debris, but at the minimize the time for minimizing the total flow through the other filters; and
- flow rate of backwash water during backwashing.

The appropriate parameter values can be determined from testing and or modelling of the system in advance. Preferably, the time to complete a cycle is significantly shorter than the interval between successive cycles. The number of banks can be selected to be sufficiently numerous to facilitate this function. The valves can be activated by signals transmitted to the valves in accordance with the determined parameter values.

Typically, each bank is alternately backwashed by operating one or more valves, e.g. the three-way diverter valve 253, for a fixed duration and this sequence is repeated at fixed intervals.

Thus, the operation can include multiple cleaning sequences and the same parameter values can conveniently be applied for several cleaning sequences or indeed most or all of them.

The apparatus 21 is designed to facilitate that the "loading history" of the filters is similar and as homogenous as possible between different filters. This means that it is undesirable for the filters to be exposed to different processing history. That is, the amount and rate of permanent build-up (not removable by backwashing) is approximately the same between filters and/or between banks. Thus, in their operational lifetime until replacement, the filters of each housing and/or bank are typically operated for approximately equal total length of time in filtering duty, approximately equal total length of time in backwashing, passing approximately equal total flow in backwashing, and/or passing approximately equal total flow in filtering. The banks are preferably cleaned in quick succession within a cleaning sequence, and preferably the same set of banks are exposed to the same or similar operating conditions throughout their life. Preferably, also the apparatus is operated to minimise the rate of the permanent build-up of the filters. Thus, the total flow over the lifetime that they see is sought to be as low as possible. Therefore, the number of filter housings the banks is chosen to be far higher than strictly necessary for the production of the pre-defined output of filtered water from the apparatus 21. For example, the number of housings in total is in the range of more than twice that necessary to achieve the desired output. The filters can support flow through the housing in a in normal filtration operation in a range between a minimum and a maximum flow. Preferably the number of filters is selected so that the filters operate closer to the minimum flow than the maximum flow.

It is sought to operate the filters so that the amount of build-up of permanent residue of one filter or filter housing at the time another of the filters is required to be replaced, measured as transmembrane pressure (TMP) measured against a predetermined acceptable level, does not deviate from that of any other filter or filter housing by more than 5%, i.e. that any such deviation in TMP is preferably less than 5%, or more preferably less than 1%.

To maintain the flux through housings for continuous production of the required quantity of filtered water, the filters are cleaned by the backwashing operation which uses the filtered water. To assist with reliable backwash operation, it is sought to provide a substantially equal flux through each of the filter housings. This is facilitated by the design of the housings where filters are placed in parallel spaced apart vertical tubular housing sections that feed between upper and lower common chambers, and by the piping symmetry of the ultrafiltration modules. The inlets 201 to the filter housings are all at the same height, similarly the outlets 202 from the filter housings all at the same height, and higher than the inlets. This principle allows the pressure differential to be limited to that sufficient to drive the flow through the filter elements and overcome the height difference of one layer of the housings. This allows a smaller pressure differential to produce the necessary output from the system, as compared with e.g. stacked arrangements. Stacking the filters whereby inlets are at different heights are preferably to be avoided because this can unnecessarily introduce additional "hydrostatic" head to the flow system, and the pressures to which different filters elements are exposed during operation may differ and thus, the rate or other characteristic of residue build-up on different filters may be different for different ones. Thus, some filters may come to the end of their operational lifetime before others. The present solution avoids these undesired "imbalances".

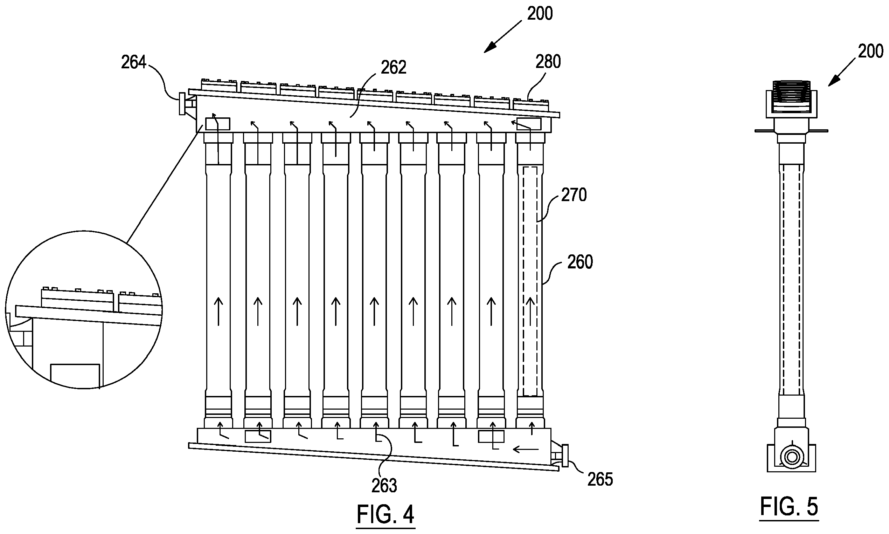

In Figures 4 and 5, a filter housing 200 is shown. The housing 200 comprises vertical tubular housing sections 260 in the form of cylinder sections which are spaced apart horizontally. The filter elements 270 are contained inside the housing sections in dead-end configuration, such that in order for water to flow through from one end of the tubular section to the other the water passes through the element 270. In this example, there are nine cylindrical sections 260 spaced horizontally apart and arranged in a horizontal row or "train". The vertical housing sections are arranged to extend between upper and lower end chambers 262, 264. For filtering purposes, water enters through the housing inlet 265 into the lower chamber 263, and is distributed in parallel into the lower ends of the vertical tubular sections 260. The water passes through the filter membranes 270 of respective tubular housing sections 260. Filtered water passes out of the upper ends of the vertical tubular sections 260 and is received into the upper chamber 264. The filtered water from the tubular sections 260 is directed out and exits through the common outlet 264.

For backwashing, the backwash water is directed through the housing 200 in the opposite sense. In the description above, "inlets" and "outlets" of the filter housings are referred to by their usage in filtering mode. In backwash mode, the "inlets" referred to above are "outlets" and the "outlets" referred to above are "inlets".

The filter elements 270, e.g. membrane filters, can be arranged in a cartridge which is inserted the vertical tubular section. When the cartridge is inserted, the filter elements are arranged for filtration. The housing has lids 280 on covering openings in the ceiling of the upper chamber. An opening is aligned with each of vertical sections. When the lid 280 is removed, the cartridge can be inserted or extracted from the vertical housing section 260 through the opening. The lid 280 can be opened and access to the vertical housing section obtained while the housing 200 is installed in the facility, such as shown in e.g. Figure 3. The lids 280 provide convenient way of replacing the filter membranes 270 at the end of their lifetime. The cartridge can be easily removed and replaced through the opening of the lid.

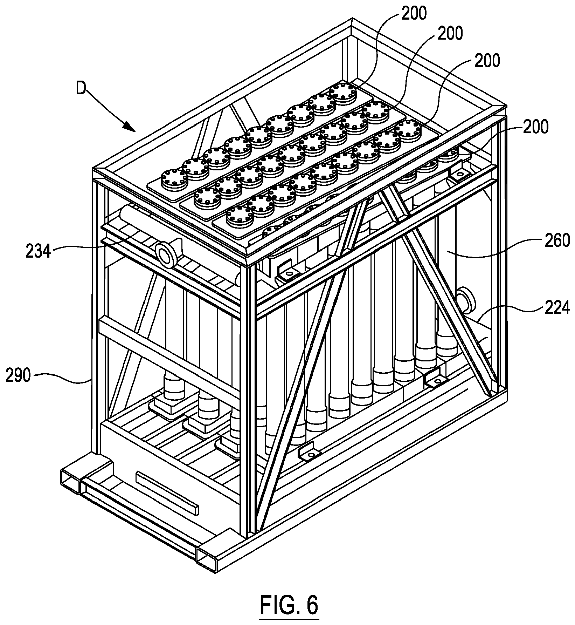

In Figure 6, it can be further seen how the filter housings 200 are arranged in the bank D. In this case, the bank D has four filter housings 200 arranged so that the vertical tubular housing sections 260 are arranged side by side in four rows or trains. The inlets 265 of the housings are connected to the inlet manifold pipe 224. The outlets 264 of the housings are connected to the outlet manifold pipe 234. This arrangement allows the bank D of filter housings 200 to be controlled independently. The water is processed and filtered in parallel through the vertical housing sections. When filtering, the bank D is supplied with water to be filtered into the manifold 224 and from there it is distributed in parallel into the four housings 200 and into the nine tubular housing sections 260 of each housing 200. The water that enters passes through the filter elements 270 in the vertical housing sections 260 and is filtered. The filtered water that has passed through the filter elements is received in the outlet manifold pipe 234 and exits from the bank D from there.

The bank of filter housings 200 in this example is mounted in a frame 290 which allows for the unitary deployment and modular connection of the bank D into the apparatus 21.

In Figures 4 to 6 the exterior of the housing is visible. The housing comprises walling which is generally, e.g. walls with a thickness of 2 to 5 mm thick. The walling defines an interior conduit for fluid to flow from the inlet to the outlet through the housing. The interior surfaces of the walling follow the exterior surfaces of the walling as depicted. For example, the vertical tubular sections comprise cylindrical walling with a corresponding cylindrical interior space.

In the housings and across all of the banks, filter elements 270 are arranged in the same way, inside the vertical tubular housing sections 260. Notably, these are arranged only in one layer, as a 2-D array, side by side. The capacity is provided by filters arranged in parallel in the horizontal array of filter housings. The tubular housing sections 260 are arranged in parallel, are equally long, such that the upper and lower ends are arranged at common height above the seabed when installed. The arrangement means that the inlets 265 to the housings 200 can be arranged in one horizontal plane and outlets 264 can be arranged in another horizontal plane, and the pressure in the water being processed upstream and downstream of the housing sections 260, e.g. at the inlets and outlets is consistent between filter housings and banks. The pipework can then be aptly arranged to provide minimum flow rates in parallel through the filter elements to drive the flow.

To this end, the inlet header 220 extends horizontally and is in the same horizontal plane as the inlet manifold 224 and inlets 265 of the housings 200. The feed pipe 221 is a vertical pipe. A pressure is exerted to the fluid in the inlet header corresponding with the height drop of the supply pipe 221 and helps to drive the fluid through the housings. The height drop is from a level at least equal to that of the outlets 264.

The outlet header 230 extends horizontally and is in the same plane as the outlet manifold 234 and outlets 264 of the housings 200. The exit pipe 231 is also a horizontal pipe, connecting perpendicular to the outlet header 230, and in the same plane as that.

### SWIT™ prototype testing and results

Several hollow fibre microfiltration backwash variables were tested in a SWIT™ prototype, configured generally similarly to the apparatus described above. Based on the testing performed, a method for keeping the hollow fibre membranes in very good condition and for long term operation at seabed without any need for intervention, was established.

To provide flux rates that could be considered acceptable for long term duty in subsea operation, 144 tubular housing sections were arranged in four banks connected in parallel. Three of the banks were always in operation and the fourth bank was in backwash duty. The three 'online' banks were therefore to provide the required forward flow to the membranes plus the backwash flow required for the 'offline' bank.

For backwashing, backwash water is supplied from downstream of the feed pumps 43 and comprises already-treated water. Only one train was backwashed at any time. Backwashing involved a reverse flow of filtrate at regular intervals, e.g. every 30 minutes through each bank using an ejector suction line.

The backwash process removes a solids layer from the surface of the hollow fibre membrane and regenerates the transmembrane pressure to (near) initial state.

Each bank is backwashed sequentially i.e. from 1 to 4. Once the sequence is completed the three-way valve 253 will swap the operation from backwash to filter mode.

The backwash flow rate has to be fit for purpose, and in this test case was 79 m³/hour for backwash duty.

A backwash of each array is conducted on a sequential basis so that a continuous steady state operation of the RO Membrane Feed Pump (267 m³/hour) 43 is achieved.

Backwash was optimised by use of operating variables including backwash flowrate, duration, interval and sequence. It can be noted that flowrate is a feature of membrane/contaminants interaction. This was established during trials to be 2.5 m³/hour per module corresponding to a target flowrate of 80-100 m³/hour per hollow fibre bank.

Duration (D) of backwash depends on the piping configuration. It was sought to provide sufficient time to remove all previously retained solids from the hollow fibre membranes and the upstream pipework prior to reinstating the forward process flow. This duration was established for SWIT from a study of backwash water quality during commissioning. An initial duration of 180 seconds was set for the testing phase on the basis of CFD analysis of downstream volume and backwash flowrate.

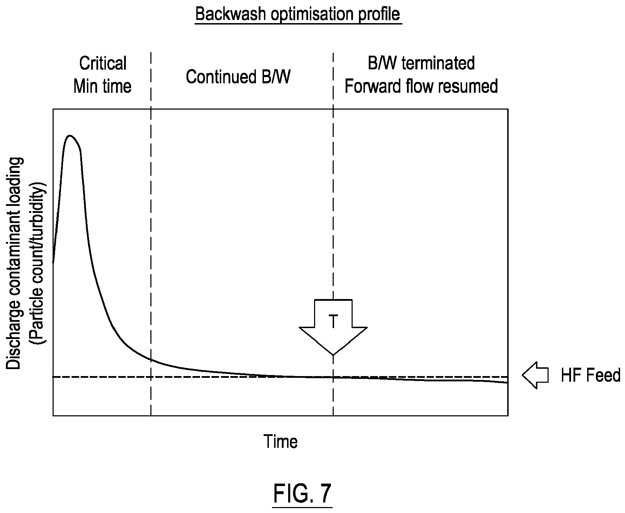

A study of backwash water quality can facilitate determination of duration. A theoretical profiling pattern is presented in Figure 7 where the backwash is considered to be 'process complete' when the quality of the backwash water is at least at that of the HF feed. Time 'T' is determined for each of the banks and the backwash duration set accordingly.

Backwash interval (I) is determined to be a function of inlet seawater quality and hence system, e.g. Seabox® / SWIT™, location. This can established during an initial stage i.e. quayside commissioning according to the measured profile and transmembrane pressure trending.

Backwash sequence is set with consideration to potential preferential flow and hollow fibre bank design, where backwash water is provided by a single filtrate header, such as for the SWIT™ prototype, the sequence is preferably 'rapid succession'. This can ensure that all hollow fibre membrane filter banks exhibit closely similar transmembrane pressure throughout subsequent process cycles.

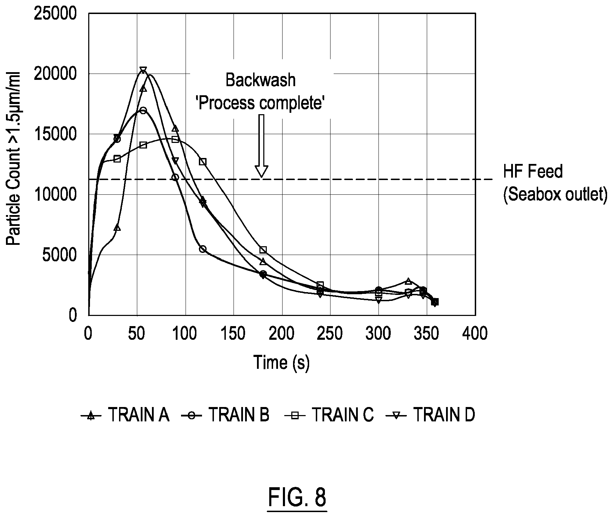

A "backwash profile" can be obtained through testing, such as indicated in Figure 8 for the prototype. The backwash profile comprises a graph of the measured cleanliness, e.g. count of particles, of the backwash water downstream from the filter. It was found necessary to sample downstream of the ejector to gather sufficient sample volume to meet the sample frequency requirements. The water quality at the ejector discharge was such that the most appropriate analysis was with a particle counter. An Elzone™ II particle counter device was used for measuring particle content, and measurements were taken with total count of all particles of 1.5 microns and above. This size was selected to avoid signal noise obscuring the parameter of primary interest.

At the initiation of a backwash, the time when the three-way backwash valve begins to open is denoted as time T0 and samples taken from the discharge pipe in rapid succession to study the transient water quality.

It may be important to remove all previously retained solids during the backwash cycle before the next process duty cycle begins. This is demonstrably achievable when the discharged backwash water quality is (at least) that of the process inlet backwash water. Analysis indicates that contaminants broadly follow the theoretical profile. The measured profile of Figure 8 indicates that the contaminants' levels have reached those of the process feed (Seabox® outlet) between time T120 and T180. The level of solids vs time presented follows the expected profile. A sharp instantaneous increase in particle count is caused by the hollow fibre membrane inlet process water that was previously retained in the filter housing (MEV) bottom chamber contaminating the clean ejector motive fluid. This is also reflected in the contaminant 'plateau' occurring between T10 and T30. which is particularly evident with Train C. At the 180 seconds backwash duration set point, the water quality profile indicated that the backwash was effectively complete when full flow backwash was achieved - though no dilution had been applied.

### Advantages

Advantageously, the arrangement and operation of the apparatus described above seeks to obtain long-term reliable operation of ultrafiltration or microfiltration modules in seabed operation. This can give long term maintenance free operation (6 months or more) for producing seawater with an SDI of less than 2, preferably around 1 or even less than 1. Expected lifetime of filters based on the system design and abovementioned operational strategy is in the order of several months or even years before they need replacing due to permanent fouling and deterioration. Since operation is to be subsea, the inventors have recognised that the need for long lifetime operational strategy to avoid inconvenience and difficulties of maintenance in such an environment. Reducing the flux and operating in parallel and cleaning the filters in coordinated fashion supports the long-lifetime strategy. The strategies and design of the present system run counter to usual practice in prior art filtration systems where typically filters are run and maintained more aggressively to increase utilisation of components and limit occupation of space laterally. In the examples above, coordinated filtering and backwashing is performed so as to promote long lifetime use whereby the total flux of filtering exposure of each filter is minimised, and so that the filter housings or banks do not differ substantially in their history of exposure.

## Claims

1. A method of processing seawater in a subsea facility on the seabed, wherein the facility is coupled to at least one well and is configured to provide the well with water to be injected into at least one formation of the well, and wherein the facility comprises filter elements arranged in housings, the filter elements being configured for ultrafiltration or microfiltration, the method comprising the steps of:
filtering treated seawater in at least one of the housings using at least one filter element, producing thereby filtered water; and
cleaning at least one filter element in at least one other of the filter housings by backwashing performed using at least some of the produced filtered water.

2. A method as claimed in claim 1, wherein the cleaning of the filter(s) is by backwashing only, and the backwashing is performed using only filtered water produced from the filter elements.

3. A method as claimed in claim 1 or 2, wherein the treated seawater has undergone disinfection treatment upstream of the filter housings.

4. A method as claimed in claim 3, wherein the upstream treatment of the seawater comprises chlorination of the seawater.

5. A method as claimed in any preceding claim, wherein the treated seawater has undergone electrochemical treatment upstream of the filter housings.

6. A method as claimed in any preceding claim, wherein the filtered water is produced from the membranes at a rate in the range of 10000 to 500000 barrels per day.

7. A method as claimed in any preceding claim, which further comprises directing the treated seawater in parallel through at least two different filter housings to filter the seawater.

8. A method as claimed in any preceding claim, wherein the backwashing comprises communicating backwash water through the filter elements to remove residue or particles from the filter elements, the backwash water comprising the at least some of the produced filtered water, and the method further comprises generating suction in the backwash water that has travelled through the filter element to facilitate communication of the backwash water through the filter element.

9. A method as claimed in any preceding claim, which includes defining batches of filter housings that contain filter elements to be backwashed, and performing the backwashing of the filter elements batch by batch, wherein the backwashing of one batch is performed using backwash water comprising at least some of the produced filtered water from the filter elements of at least one other batch, the backwashing and filtering of water taking place concurrently.

10. A method as claimed claim 9, which further comprises performing a plurality of backwash cycles, wherein in each cycle the filter membranes are backwashed in batches, one at a time, based on predefined parameters selected from any one or more of:
time interval between successive cleaning sequences;
time interval between backwashing different batches in the cleaning cycle;
order or sequence of backwashing of the banks within the cycle;
duration of the backwashing; and
flow rate of backwash water during backwashing.

11. Apparatus for performing the method of any preceding claim, the apparatus comprising filter elements arranged in housings, the filter elements being configured for ultrafiltration or microfiltration, the apparatus being operable to filter treated seawater in at least one of the housings, and being further operable to selectively clean, by backwashing performed using at least some of the produced filtered water, at least one filter element of at least one other of the filter housings.

12. Apparatus as claimed in claim 11, further comprising:
at least one valve for switching at least one of the housings between a first, filter mode and a second, backwash mode;
wherein in the backwash mode, fluid communication between a production conduit of the at least one of the housings and a backwash conduit is obtained for communicating at least some of the produced filtered water from the production outlet through the switched housing to the backwash conduit; and
at least one suction device for generating suction in the backwash conduit in the backwash mode for facilitating to draw filtered water from the production conduit through the housing and the valve into the backwash conduit, wherein the suction device is arranged downstream of the valve or downstream of the housing in backwash mode or both.

13. Apparatus as claimed in claim 12, wherein the suction device comprises at least one ejector.

14. Apparatus as claimed in any of claims 12 or 13, wherein the suction device comprises at least one pump arranged to produce suction in the backwash pipe at a location upstream of the pump.

15. Apparatus as claimed in any of claims 12 to 14, wherein in the filter mode, fluid communication is obtained between a supply conduit and the filter housing for supplying treated seawater to the filter housing, and fluid communication between that filter housing and the backwash conduit is prevented.

16. Apparatus as claimed in any of claims 12 to 15, wherein the valve comprises at least one remotely operable three-way valve having a first flow section coupled to the filter housing, a second flow section coupled to the supply conduit, and a third flow section coupled to a backwash conduit, the three-way valve being controllable so that:
in the filter mode, the first flow section is arranged in fluid communication with the second flow section for supplying treated seawater to the filter housing; and
in the backwash mode, the first flow section is arranged in fluid communication with the third flow section for discharging backwash water from the filter housing to the backwash conduit.

17. Apparatus as claimed in claim 16, wherein the valve serves a plurality of filter housings, the first flow section being coupled to the plurality of filter housings or banks thereof.

18. Apparatus as claimed in any of claims 12 to 17, wherein the valve has a body which is movably disposed within a valve housing to be movable between one configuration in the filter mode and another configuration in the backwash mode, and the body in one mode prevents fluid communication in the other and vice versa.

19. Apparatus as claimed in any of claims 11 to 18, wherein the filter housings are arranged to be supplied with treated seawater in parallel from a common supply pipe to for filtering the seawater in parallel.

20. Apparatus as claimed in any of claims 11 to 19 supported on the seabed and coupled to at least one well for providing the well with water to be injected into at least one formation of the well, wherein at least one or more of the filter housings are submerged and each comprises a plurality of horizontally spaced apart vertical tubular sections in which the filter membranes are contained, wherein the tubular sections have a common height above the seabed.

21. A system or facility comprising:
apparatus in accordance with any of claims 11 to 20; and
at least one pre-treatment unit for pre-treating the water to be filtered, the pre-treatment unit being coupled to the apparatus for supplying pre-treated water to the apparatus.
